(19) Europäisches Patentamt
European Patent Office
Office européen des brevets

(11) Veröffentlichungsnummer: **0 226 745**
**B1**

(12) **EUROPÄISCHE PATENTSCHRIFT**

(45) Veröffentlichungstag der Patentschrift: **27.12.90**

(51) Int. Cl.⁵: **B 60 R 22/02,** B 60 R 22/22

(21) Anmeldenummer: **86114472.3**

(22) Anmeldetag: **18.10.86**

(54) **Dreipunkt-Sicherheitsgurtsystem.**

(30) Priorität: **19.12.85 DE 3545140**

(43) Veröffentlichungstag der Anmeldung:
**01.07.87 Patentblatt 87/27**

(45) Bekanntmachung des Hinweises auf die
Patenterteilung:
**27.12.90 Patentblatt 90/52**

(84) Benannte Vertragsstaaten:
**DE FR GB IT SE**

(56) Entgegenhaltungen:
**DE-A-3 439 076**
**DE-A-3 439 077**
**FR-A-2 411 102**
**US-A- 391 807**
**US-A-3 841 658**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Haberl, Josef
Jupiterweg 7
D-8011 Aschheim (DE)**
Erfinder: **Marke, Dietrich
Neue Heimat 14
D-8083 Mammendorf (DE)**
Erfinder: **Zelenka, Vlado
Bahnhofstrasse 4
D-8057 Eching (DE)**

Courier Press, Leamington Spa, England.

## Beschreibung

Die Erfindung bezieht sich auf ein Dreipunkt-Sicherheitsgurt-system, insbesondere für den Rücksitz eines Kraftfahrzeuges nach dem Oberbegriff des Hauptanspruchs.

Bei den derzeitigen Fahrzeugen verlaufen die Sicherheitsgurte auf dem Rücksitz von einem oberen Befestigungspunkt an der Sitzaußenseite schräg nach unten zu einem in etwa in der Mitte des Fahrzeugsitzes befindlichen Gurtschloss und von dort zurück zur Sitzaußenseite zu einem weiteren Befestigungspunkt im Bereich des Sitzkissens. Durch die Anordnung des Gurtschlosses im Bereich der Sitzmitte treten einige Nachteile auf. Der Auslegung des Gurtbandverlaufs und damit der Gurtbandgeometrie sind enge Grenzen gesetzt, da die Lage des Gurtschlosses im wesentlichen durch die Trennfuge zwischen der Rückenlehne und dem Sitzkissen bestimmt ist. Weiter haben korpulente Personen Schwierigkeiten, bei einem so angeordneten Gurtschloß den Sicherheitsgurt zu schließen. Schließlich kann ein Gurtschloß in der Sitzmitte verschiedene Ausgestaltungen des Rücksitzes behindern; gedacht sei an eine Mittelarmlehne oder die Durchführung eines Skisackes durch die Rückenlehne.

Die DE-AS 1 281 858 zeigt neben anderen Ausführungsbeispielen eine Möglichkeit, das Gurtschloß an der Außenseite des Fahrzeugsitzes vorzusehen. Diese Möglichkeit ist allerdings nur angedeutet, insbesondere sagt die Schrift nichts über die Art der Anordnung des Gurtschlosses aus. Da aber in der Regel das Sitzkissen des Fahrzeugsitzes an die Innenwandung der Fahrzeugkarosserie anstößt, läßt sich die bekannte Lösung zumindest in einem solchen Fall nicht verwirklichen.

Bei der FR-A-2 411 102 ist das Gurtschloß tief im Sitzkissen angeordnet. Es wird über einen elastischen Einführungstrichter am Bezugstoff des Sitzkissens gehalten. Der Einführungstichter hat dabei die Aufgabe, das Gurtschloß zu halten und die Eindrückbewegung des Sitzes mitzumachen. Schließlich soll er als Führungshilfe für die Schloßzunge beim Einsteckenin das Schloß dienen.

Bei der Ausgestaltung dieser Lösung hat die Frage der Platzverhältnisse keine Rolle gespielt. Vielmehr ist Ziel ein Miteinwandern des Gurtschlosses beim Zusammendrücken des Sitzkissens durch einen Fahrzeuginsassen. Es soll vermieden werden, daß in diesem Fall das Gurtschloß nach oben vorsteht und gegen den Körper des Fahrzeuginassen drückt.

Aufgabe der Erfindung ist es, ein gattungsgemäßes Sicherheitsgurtsystem so weiterzubilden, daß das Gurtschloß auch bei beengten Platzverhältnissen ohne weiteres an die Außenseite des Sitzkissens untergebracht werden kann.

Die Aufgabe wird erfindungsgemäß gelöst mit den kennzeichnenden Merkmalen des Hauptanspruchs. Weitere vorteilhafte Ausgestaltungen der Erfindung ergeben sich aus den Unteransprüchen.

Mit der erfindungsgemäßen Lösung läßt sich in einfacher Weise ein Gurtbandverlauf herstellen, wie er in der DE-AS 1 281 858 vorgeschlagen ist. Dadurch ergeben sich die Vorteile einer verbesserten Auslegung der Gurtbandgeometrie. Das Gurtschloß kann je nach Erfordernis weiter vorne oder weiter hinten an der Sitzkissenaußenseite vorgesehen sein. Auch ist die Gurtbedienung einfacher und schließlich braucht bei der Gestaltung der Rückenlehne nicht auf das Gurtband system und insbesondere auf das Gurtschloß Rücksicht genommen werden. Außerdem kann das Sitzkissen des Fahrzeugsitzes ganz an die Innenwandung der Fahrzeugkarosserie anstoßen. Es braucht kein Spalt bzw. Freiraum für die Anordnung des Gurtschlosses vorgesehen werden, in den Gegenstände hineinfallen und dann nur mit Mühe herausgeholt werden können. Schließlich verhindert die Blende durch ihre Ausgestaltung auch im Bereich der Ausnehmung des Sitzkissens einen solchen unerwünschten Freiraum.

Die Blende selbst läßt sich in einer zweckmäßigen Ausführungsform auf das Schloßgehäuse des Gurschlosses aufklipsen. Hierfür weist sie Führungsflächen auf, die der Außenkontur des Schloßgehäuses nachgebildet sind. Auf diese Weise ist die Einbaulage der Blende eindeutig festgelegt. Rastnasen an den Fühlrungsflächen greifen bei aufgesteckter Blende in entsprechende Aussparungen des Schloßgehäuses. Damit ist die Einbaulage der Blende festgelegt.

Die Blende besteht zweckmäßigerweise aus Kunststoff und ist der jeweiligen Farbe des Fahrzeugsitzes bzw. des Innenraumes angepaßt. Weiter ist es zweckmäßig, die Blende in ihrer Form der ihr zugekehrten Innenwandung der Fahrzeugkarosserie nachzubilden Damit ist sie auch an dieser Stelle in ihrer Einbaulage definiert. Außerdem kann sie Abschnitte der Innenverkleidung der Karosserie aufnehmen und damit einen optisch guten Übergang zwischen Fahrzeugsitz und Innenwandung herstellen.

Nachfolgend ist ein bevorzugtes Ausführungsbeispiel der Erfindung näher beschrieben und in der dazugehörigen Zeichnung dargestellt. Es zeigen

Fig. 1 die Anordnung eines erfindungsgemäßen Sicherheitsgurtsystems aufeinem Fahrzeugrücksitz;

Fig. 2 eine vergrößerte Darstellung einer Blende nach Fig. 1 und

Fig. 3 die gleiche Blende, gesehen in Pfeilrichtung Z nach Fig. 2.

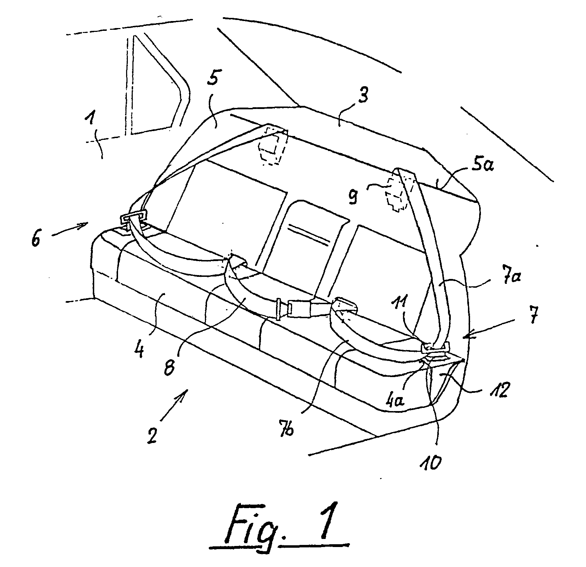

In Fig. 1 ist in wenigen Strichen ein hinterer Abschnitt eines Kraftfahrzeuges dargestellt. Es ist eine Seitenwand 1 erkennbar, ein insgesamt mit 2 bezeichneter Rücksitz und eine Hutablage 3. Der Rücksitz 2 setzt sich zusammen aus einem Sitzkissen 4 und einer Rückenlehne 5. Außerdem weist er mehrere Sicherheitsgurte auf und zwar ein linkes und ein rechtes Dreipunkt-Sicherheitsgurtsystem 6, 7, sowie einen dazwischen angeordneten statischen Beckengurt 8. Die Sicherheitsgurtsysteme 6, 7 sind im wesentlichen gleich aufgebaut und bei deren weiteren Betrachtung wird daher nur noch auf das der Seitenwand 1 abgewandte Gurtsystem 7 Bezug genommen.

Dieses Gurtsystem 7 teilt sich in zwei Gurtbandabschnitte 7a, 7b. Dabei führt der Gurtabschnitt 7a von einem in Richtung zur Fahrzeugsitzmitte gerückten Aufrollautomaten 9 über die Oberkante 5a der Rückenlehne 5 schräg nach unten zu einem an der Außenseite der Sitzkissen 4 angeordneten Gurtschloß 10. Von dort verläuft der Gurtbandabschnitt 7b zurück und führt durch die Trennfuge, gebildet aus Rückenlehne 5 und Sitzkissen 4, zu einem nichterkennbaren Befestigungspunkt. Die Verbindung der Gurtabschnitte 7a, 7b mit dem Gurtschloß 10 übernimmt eine Schloßzunge 11, durch die über einen Durchlaufschlitz das Gurtband führt. Hat ein Fahrzeuginsasse auf dem Rücksitz Platz genommen und den Sicherheitsgurt angelegt, so verläuft der Gurtabschnitt 7a über seinen Oberkörper schräg nach unten, während sich der Gurtabschnitt 7b über seinen Beckenabschnitt erstreckt.

Im Bereich des Gurtschlosses 10 weist das Sitzkissen 4 an seiner Außenseite eine Aussparung 4a auf. Dadurch ist es möglich, das Gurtschloß etwas in das Sitzkissen hineinverlagert anzuordnen. Die Aussparung 4a ist abgedeckt mit einer Blende 12, die einen harmonischen Übergang zwischen Sitzfläche, Rückenlehne und der übrigen Innenverkleidung bildet.

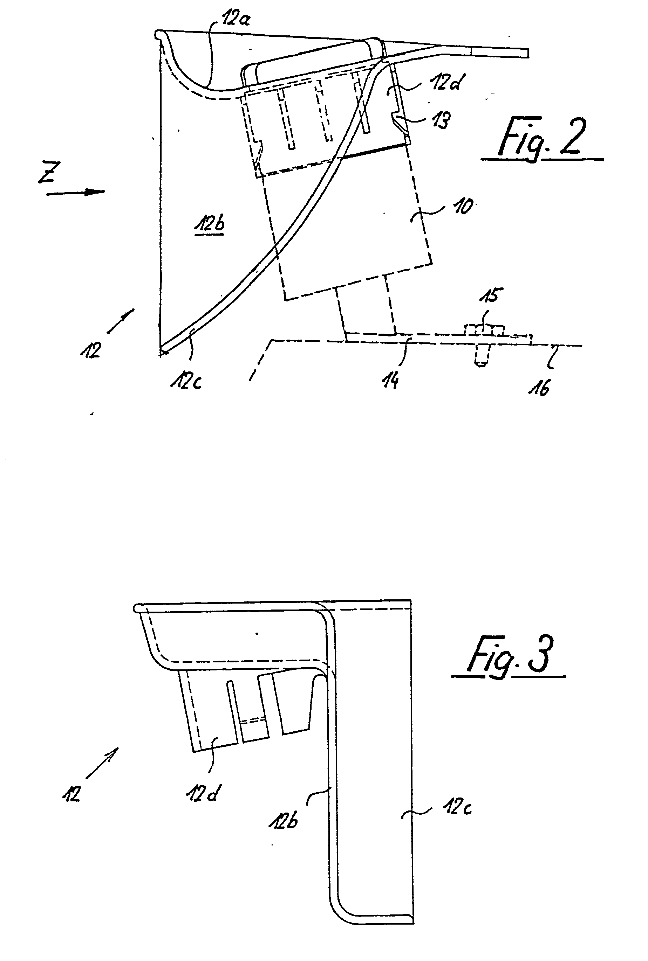

In Fig. 1 ist die Blende in ihrer Form lediglich angedeutet. Fig. 2 und 3 zeigen sie in vergrößertem Maßstab in ihrer eigentlichen Form. Sie besteht im wesentlichen aus einem in der Ebene der Sitzfläche liegenden, als Mulde ausgelegten Abschnitt 12a, an den sich zur Sitzaußenseite hin ein senkrechter Abschnitt 12b anschließt. Von diesem Abschnitt 12b erstreckt sich wiederum ein senkrechter Flanschabschnitt 12c zur Innenwandung der Fahrzeugkarosserie hin. Dieser Flansch 12c weist in etwa die Form eines Kreisbogens auf und ist dem Radhaus der Fahrzeugkarosserie nachgebildet. Im Einbauzustand liegt er sich dort an.

Weiter sieht die Blende 12 in ihrer Mulde 12a eine Ausnehmung auf, die von nach unten ragenden Führungsflächen 12d umgrenzt ist. Die von den Führungsflächen 12d umgrenzte Fläche entspricht der Querschnittsfläche eines in Fig. 2 nur gestrichelt angedeuteten Schloßgehäuses des Gurtschlosses 10. Ferner weisen die Führungsflächen 12d Rastnasen 13 auf. die in entsprechende Aussparungen des Schloßgehäuses 10 einrasten.

Der Vollständigkeit halber sei noch erwähnt, daß das Schloßgehäuse bzw. das Gurtschloß 10 über ein Flacheisen 14 und einer Schraubverbindung 15 am Boden 16 der Fahrzeugkarosserie befestigt ist.

Bei der Montage des Fahrzeugsitzes bzw. des hier behandelten Gurtschlosses geht man in folgender Weise vor. Zunächst wird das Gurtschloß 10 am Boden 16 verschraubt. Sodann wird das Sitzkissen 4 befestigt, wobei das Gurtschloß 10 sich nunmehr in der seitlichen Aussparung 4a befindet. Schließlich setzt man von oben die Blende 12 auf das Gurtschloß auf und drückt sie nach unten bis die Rastnasen 13 in die entsprechenden Ausnehmungen einrasten. In dieser Lage liegt auch der Flansch 12c an der entsprechenden Karosserieteilen der Fahrzeugkarosserie auf. Beim Aufschieben der Blende 12 verhindern die Führungsflächen 12d ein Verkanten. Nach aufgesetzter Blende 12 schließlich wird eine nicht näher erkennbare Innenverkleidung an der Wand der Fahrzeugkarosserie befestigt. Die Innenverkleidung ist im Bereich der Blende so ausgebildet, daß sie den zwischen Flansch 12c und Abschnitt 12b gebildeten Freiraum ausfüllt. Dabei ergibt sich ein optisch guter Übergang zwischen Fahrzeugsitzblende und Innenverkleidung.

Beim Demontieren sind nach Entfernung der Innenverkleidung lediglich die Rastnasen 13 aus den Aussparungen zurückzudrücken. Die Blende 12 läßt sich dann mühelos wieder nach oben abziehen.

## Patentansprüche

1. Dreipunkt-Sicherheitsgurtsystem, insbesondere für den Rücksitz (2) eines Kraftfahrzeuges mit einem ersten Gurtabschnitt (7a), der in etwa in der Sitzmitte von der Oberkante (5a) der Rückenlehne (5) über den Oberkörper der Fahrzeuginsassen schräg nach unten zu einem an der einer Karosserieinnenwandung (1) benachbarten Außenseite des Sitzkissens (4) angeordneten Gurtschloß (10) verläuft und von dort ein zweiter Gurtabschnitt (7b) über den Beckenabschnitt des Fahrzeuginsassen zurückführt zu einem im Bereich der Trennfuge zwischen Rückenlehne (5) und Sitzkissen (4) vorgesehenen Befestigungspunkt, dadurch gekennzeichnet, daß das Sitzkissen (4) an seiner Außenseite eine Aussparung (4a) für das Gurtschloß (10) vorsieht, innerhalb derer das über einen Haltebügel (Flacheisen 14) an der Fahrzeugkarosserie (Boden 16) direkt befestigte Gurtschloß (10) angeordnet ist und daß eine Blende (12) derart am Gurtschloß (10) befestigbar ist, daß sie die Aussparung (4a) des Sitzkissens (4) abdeckt.

2. Sicherheitsgurtsystem nach Anspruch 1, bei dem die Blende (12) auf das Schloßgehäuse des Gurtschlosses (10) aufklipsbar ist und dabei Führungsflächen (12d) aufweist, die auf die Außenkontur des Schloßgehäuses abgestimmt sind, dadurch gekennzeichnet, daß an den Führungsflächen (12d) wenigstens eine Rastnase (13) für den Eingriff in das Schloßgehäuse vorgesehen ist.

3. Sicherheitsgurtsystem nach Anspruch 1 oder 2, dadurch gekennzeichnet, daß die Blende (12) in ihrer Form der ihr zugekehrten Innenwandung der Fahrzeugkarosserie nachgebildet ist.

## Revendications

1. Ceinture de sécurité à trois points d'ancrage notamment pour la banquette arrière (2) d'un véhicule automobile, comprenant un premier segment de ceinture (7a) qui passe sensiblement du milieu de la banquette, à partir du bord supérieur (5a) du dossier (5) par-dessus la partie supérieure du corps du passager, en biais vers le bas jusqu'à une serrure de ceinture (10) prévue sur le côté extérieur du siège (4) au voisinage de la paroi intérieure (1) de la carrosserie et de là un second segment de ceinture (7b) passe par-dessus le bassin du passager pour revenir jusqu'à un point d'ancrage prévu au niveau de la jonction entre le dossier (5) et le siège (4), ceinture caractérisée en ce que le siège (4) comporte sur son côté extérieur, une cavité (4a) pour la serrure (10), cavité dans laquelle est prévue la serrure (10) fixée directement à la carrosserie (fond 16) par l'intermédiaire d'un étrier de fixation (fer plat 14) et un cache (12) se fixe sur la serrure (10) pour recouvrir la cavité (4a) du siège (4).

2. Ceinture de sécurité selon la revendication 1 dont le cache (12) se clipse sur le boîtier de la serrure de ceinture (10) et comporte des surfaces de guidage (12d) correspondant au contour extérieur du boîtier de la serrure, caractérisée en ce que les surfaces de guidage (12d) comportent au moins un bec d'encliquetage (13) pour venir prendre dans le boîtier de la serrure.

3. Ceinture de sécurité selon la revendication 1 ou 2, caractérisée en ce que le cache (12) imite par sa forme la paroi intérieure correspondante de la carrosserie du véhicule.

**Claims**

1. A three-point safety-belt system, in particular for the rear seat (2) of a motor vehicle with a first belt section (7a) which runs approximately in the centre of the seat from the upper edge (5a) of the back rest (5) over the upper body of the occupant of the vehicle obliquely downwards to a belt lock (10) arranged on the outer side of the seat cushion (4) adjacent to an inner wall (1) of the car body, and from there a second belt section (7b) leads over the lap of the occupant of the vehicle back to an attachment point provided in the region of the separating line between the back rest (5) and the seat cushion (4), characterised in that the seat cushion (4) on its outer side provides a recess (4a) for the belt lock (10), within which the belt lock (10) is arranged, which is directly attached to the vehicle body (floor 16) via a retaining clip (flat bar 14), and that a shutter (12) is able to be secured on the belt lock (10) such that it covers the recess (4a) of the seat cushion (4).

2. A safety-belt system according to claim 1, in which the shutter (12) is able to be clipped onto the lock housing of the belt lock (10) and has guide faces (12d) here which are matched to the outer contour of the lock housing, characterised in that on the guide faces (12d) at least one detent (13) is provided for engagement into the lock housing.

3. A safety-belt system according to claim 1 or 2, characterised in that the shutter (12) follows in its shape the inner wall of the vehicle body which faces it.

$$\underline{Fig.\ 1}$$

*Fig. 2*

12a

12d

13

Z

12b

10

15

12

14

16

1

12c

*Fig. 3*

12

12d

12b

12c

1